# EUROPÄISCHE PATENTSCHRIFT

(11) **EP 2 375 550 B1**
(45) Veröffentlichungstag und Bekanntmachung des Hinweises auf die Patenterteilung: **05.06.2019**
(21) Anmeldenummer: 11002788.5
(22) Anmeldetag: 04.04.2011
(51) Int. Cl.: H02K 1/14, H02K 15/04, H02K 15/095

(54) **Herstellung des Stators einer elektrischen Maschine**
Manufacturing stator of rotary electric machine
Fabrication du stator d'un moteur électrique

(30) Priorität: 12.04.2010 DE 102010014627
(43) Veröffentlichungstag der Anmeldung: 12.10.2011
(73) Patentinhaber: WILO SE, 44263 Dortmund (DE)
(72) Erfinder: Bouilly, Hervé, 53940 Le Genest St Isle (FR); Signori, Gilles, 35740 PACE (FR); Dejean, Philippe, 53960 Bonchamp Les Laval (FR); Leze, Adrien, 53940 St. Berthevin (FR)
(74) Vertreter: Cohausz Hannig Borkowski Wißgott

(56) Entgegenhaltungen:
- EP-A1- 1 322 021
- EP-A1- 1 499 000
- EP-A2- 1 014 536
- EP-A2- 1 096 642
- EP-A2- 1 783 880
- WO-A1-2006/120054
- WO-A1-2010/025978
- DE-A1- 19 961 339
- DE-A1-102008 010 231
- DE-A1-102008 036 025
- JP-A- 2000 358 346
- US-A1- 2002 113 518
- US-A1- 2003 127 933
- US-A1- 2004 031 874
- US-B1- 6 404 095

## Beschreibung

Die Erfindung betrifft ein Verfahren zum Herstellen des Stators einer elektrischen Maschine und zum Bewickeln von Kunststoff-Wicklungsträgem des Stators, wobei der Stator einen Ring von Polschenkeln aufweist, die ringförmig angeordnet sind und deren innere Jochsegmente einen zylindrischen Raum für den Rotor bilden und jeweils einen radial nach außen weisenden Polsteg aufweisen, auf den jeweils ein Wicklungsträger von außen aufgesteckt wird. Es gibt Flyerwicklungen, welche mittels einer Schablone die Wicklung erstellen. In diesem Fall ist auch ein automatisches Kontaktieren möglich. Mit einem solchen Verfahren ist aber die Herstellung geordneter Lagenwicklung nicht möglich. Das bedeutet, dass die zur Verfügung stehenden Wickelräume im Stator nicht optimal genutzt werden können. Der Stator muss entsprechend größer ausgeführt werden. Es wird mehr Material benötigt (Kosten).

Um eine Lagenwicklung mittels Flyer oder Linearwickler herzustellen, ist es heute üblich, den Wicklungsträger einzeln zu bewickeln und anschließend zum Stator zusammenzufügen. Bei diesen Verfahren müssen jedoch die Wickeldrähte anschließend noch kontaktiert werden. Das führt zu einer hohen Anzahl von Kontaktstellen.

Das Dokument US2004/0031874 A1 offenbart ein Verfahren zum Wickeln eines Stators.

Neben dem Vorteil einer automatischen Kontaktierung, lässt sich mit dem neuen Wickelverfahren eine Lagenwicklung herstellen. Damit können die Wickelräume optimaler genutzt werden. Der Stator kann damit kompakter ausgeführt werden.

Aufgabe der Erfindung ist es, Herstellung und Montage des Stators einer elektrischen Maschine zu vereinfachen und die Fehlerhäufigkeit zu verringern.

Diese Aufgabe wird erfindungsgemäß durch ein Verfahren nach Anspruch 1 gelöst.

Im vom Polschuh abgehobenen Zustand ist ein Bewickeln eines Wicklungsträgers wesentlich einfacher und kann mit höherer Qualität der Wicklung durchgeführt werden. Hierbei ist besonders vorteilhaft, wenn nach dem Bewickeln eines Wicklungsträgers derselbe Wicklungsdraht für die Wicklung mindestens eines weiteren Wicklungsträgers desselben Stators verwendet wird, ohne den Wicklungsdraht zu trennen, so dass nach dem Bewickeln der einzelnen Wicklungsträger die Anschlussleitungen der Wicklungen nicht mehr miteinander verbunden werden müssen, sondern die Wicklungen, die miteinander verbunden sein sollen, sind nach Herstellung der Wicklungen bereits miteinander elektrisch verbunden.

Vorzugsweise wird vorgeschlagen, dass nach dem Aufstecken der Wicklungsträger auf die Polstege die Drähte zwischen den Wicklungen an den Polschuhring angedrückt werden. Ferner ist ein wichtiger Herstellungsschritt, dass nach dem Bewickeln und Aufstecken aller Wicklungsträger auf den Pulschuhring ein äußerer Rückschlussring aufgesetzt wird.

Vorzugsweise wird vorgeschlagen, dass die Polschuhe aus geschichteten Statorblechen zusammengesetzt sind. Hierbei können zum Bilden des Pulschuhringes die Polschuhe miteinander derart stoffschlüssig verbunden sein, dass einige Statorbleche Verbindungsstege zwischen den inneren Jochsegmenten bilden.

Vorzugsweise wird vorgeschlagen, dass der äußere Rückschlussring aus geschichteten Statorblechen zusammengesetzt ist.

Ein erheblicher Vorteil wird erzielt, wenn während des Bewickelns des Wicklungsträgers der Drahtgeber um den Wicklungsträger rotiert. Von wesentlichem Vorteil kann aber auch sein, wenn alternativ während des Bewickelns der Wicklungsträger rotiert (= Linearwickler).

Vorzugsweise wird vorgeschlagen, dass der die Polschuhe umgebende Rückschlussring aus zwei oder mehr Teilen besteht und insbesondere eckig ausgeführt ist.

Ein Ausführungsbeispiel der Erfindung ist in der Zeichnung dargestellt und wird im Folgenden näher beschrieben. Es zeigen
- Fig. 1: den Maschinenstator mit sternförmigem Polschuhring und abgehobenem Wicklungsträger nach seiner Bewicklung,
- Fig. 2: den vollständig bewickelten Stator mit aufgesetztem Außenring.

Der Stator einer elektrischen Maschine insbesondere eines Elektromotors weist mehrere Polschuhe 1 auf, die ringförmig angeordnet sind, sodass im Folgenden von einem "Polschuhring" gesprochen wird. Jeder Polschuh 1 besteht aus einem inneren Jochsegment 2, an dem radial mittig ein Polster (Polschuhsteg) 3 angeformt ist. Die Polschuhe 1 sind aus mehreren übereinander angeordneten Statorblechen zusammengesetzt und die inneren Jochsegmente 2 aller Polschuhe 1 bilden mit ihrer konkaven Innenfläche 4 den Innenraum 5, in dem der Rotor gelagert ist.

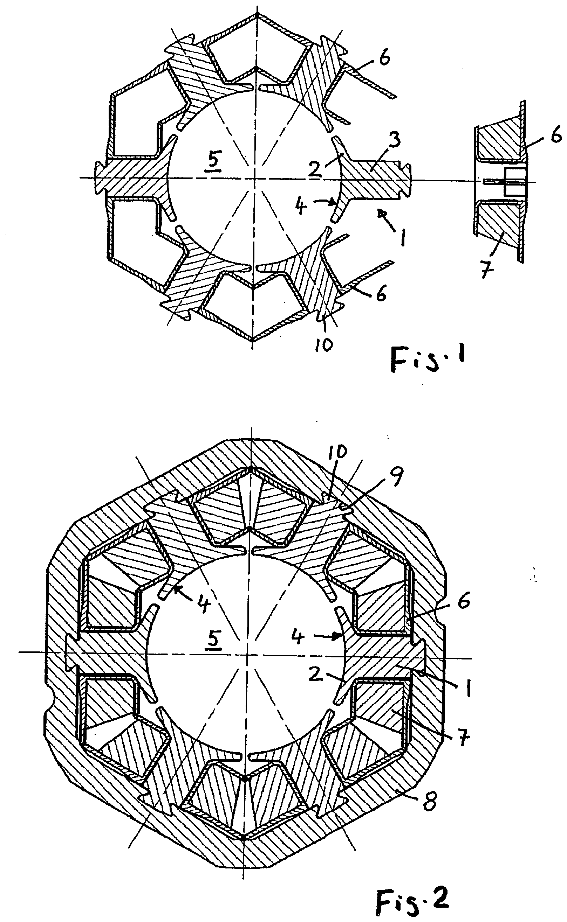

Die inneren Jochsegmente 2 der Polschuhe 1 sind miteinander in der Weise stoffschlüssig verbunden, dass etwa jede zehnte bis zwanzigste Schicht Stege zwischen den inneren Jochsegmenten bildet, so dass diese Verbindungsschicht ein durchgehendes, ringförmiges Blech ist, während bei den anderen Schichten die Bleche einzelne T-förmige Bleche sind, die keine Verbindung miteinander aufweisen, wie dies in Fig. 1 dargestellt ist.

Die Polschuhe des sternförmigen Polschuhringes besitzen damit radial nach außen weisende Polstege 3, auf die Wicklungsträger 6 aus Kunststoff aufsteckbar sind. Hierbei wird jeder Wicklungsträger 6 mit einem isolierten Draht bewickelt, um damit die Wicklung 7 zu tragen.

Zum Bewickeln des Stators wird der Polschuhring in eine Bewicklungsvorrichtung eingesetzt und die Wicklungsträger 6 werden im vom Polschuh 1 abgehobenen Zustand bewickelt. Hierbei wird entweder der Wicklungsträger 6 gegenüber dem Drahtgeber um die Wicklungsachse gedreht, oder aber, der Wicklungsträger 6 rotiert nicht, sondern der Drahtgeber rotiert um den Wicklungsträger 6.

Nach Erstellen der Wicklung 7 im Wicklungsträger 6 wird der Wicklungsträger 6 auf den Polschuh 1 von außen aufgesetzt. Nachdem ein Wicklungsträger 6 bewickelt wurde, wird das Drahtende dieser Wicklung nicht abgeschnitten, sondern es wird der nächste Wicklungsträger 6 des Polschuhs bewickelt, dessen Wicklung mit der zuvor erstellten Wicklung verbunden sein soll. Es werden damit also alle Wicklungsträger der Polschuhe nacheinander mit einer Wicklung versehen, die zusammen gehören bzw. eine zusammenhängende Kette bilden. Damit sind die zusammengehörenden Wicklungen nach dem Bewickeln bereits miteinander elektrisch verbunden und es bedarf keiner nachträglichen Verbindungs- bzw. Anschlussarbeiten.

Vor dem Bewickeln wird der Wicklungsträger entweder vom Polschuh abgezogen, oder aber der Polschuhring wurde ohne Wicklungsträger in die Wicklungsmaschine eingeführt und der Wicklungsträger wird von außen zugeführt.

Nach dem Aufstecken der Wicklungsträger auf den Polsteg 3 werden die vorstehenden Verbindungsdrähte zwischen den Wicklungen an den Stator angedrückt, damit sie nicht überstehen. Danach wird auf den Polschuhring ein Außenring als Rückschlussring 8 aufgesetzt (Fig. 2), der auf seiner Innenseite schwalbenschwanzförmige Nuten besitzt, in die schwalbenschwanzförmige Vorsprünge 10 an den äußeren Enden der Polstege 3 formschlüssig eingreifen.

Der Rückschlussring 8 kann aus zwei oder mehr Teilen bestehen und eckig ausgeführt sein. Vorzugsweise ist der Rückschlussring außen- und/oder innenseitig mehreckig insbesondere sechseckig.

## Patentansprüche

1. Verfahren zum Herstellen des Stators einer elektrischen Maschine und zum Bewickeln von Kunststoff-Wicklungsträgern (6) des Stators, wobei der Stator einen Ring von Polschuhen (1) aufweist, die ringförmig angeordnet sind und deren innere Jochsegmente (2) einen zylindrischen Raum (5) für den Rotor bilden und jeweils einen radial nach außen weisenden Polsteg (3) aufweisen, auf den jeweils ein Wicklungsträger (6) von außen aufgesteckt wird, **dadurch gekennzeichnet, dass** jeder Wicklungsträger (6) jeweils vom Polsteg (3) abgehoben, in diesem Zustand bewickelt und danach von außen auf den Polsteg (3) aufgesteckt wird, während die übrigen Wicklungsträger (5) auf den Polstegen (3) verbleiben, wobei nach dem Bewickeln eines Wicklungsträgers (6) derselbe Wicklungsdraht für die Wicklung (7) mindestens eines weiteren Wicklungsträgers (6) desselben Stators verwendet wird, ohne den Wicklungsdraht zu trennen.

2. Verfahren nach Anspruch 1,**dadurch gekennzeichnet, dass** nach dem Aufstecken der Wicklungsträger (6) auf die Polstege (3) die Drähte zwischen den Wicklungen (7) an den Ring der Polschuhe (1) angedrückt werden.

3. Verfahren nach Anspruch 1 oder 2, **dadurch gekennzeichnet, dass** nach dem Bewickeln und Aufstecken aller Wicklungsträger (6) auf den Ring der Pulschuhe (1) ein äußerer Rückschlussring (8) aufgesetzt wird.

4. Verfahren nach einem der vorherigen Ansprüche, **dadurch gekennzeichnet, dass** die Polschuhe (1) aus geschichteten Statorblechen zusammengesetzt sind.

5. Verfahren nach Anspruch 4, **dadurch gekennzeichnet, dass** zum Bilden des Ringes der Pulschuhe (1) die Polschuhe (1) miteinander derart stoffschlüssig verbunden sind, dass einige Statorbleche Verbindungsstege zwischen den inneren Jochsegmenten (2) bilden.

6. Verfahren nach einem der vorherigen Ansprüche, **dadurch gekennzeichnet, dass** der äußere Rückschlussring (8) aus geschichteten Statorblechen zusammengesetzt ist.

7. Verfahren nach einem der vorherigen Ansprüche, **dadurch gekennzeichnet, dass** während des Bewickelns des Wicklungsträgers (6) der Drahtgeber um den Wicklungsträger (6) rotiert.

8. Verfahren nach einem der Ansprüche 1 bis 6, **dadurch gekennzeichnet, dass** während des Bewickelns der Wicklungsträger (6) rotiert.

9. Verfahren nach einem der vorherigen Ansprüche, **dadurch gekennzeichnet, dass** der die Polschuhe (1) umgebende Rückschlussring (8) aus zwei oder mehr Teilen besteht und insbesondere eckig ausgeführt ist.

## Claims

1. Method for manufacturing the stator of an electrical machine and for winding of plastic winding carriers (6) of the stator, the stator has a ring of pole shoes (1) which are arranged in an annular manner, and the inner yoke segments (2) of which form a cylindrical space (5) for the rotor and each have a pole web (3) extending radially outwards, onto each of which a winding carrier (6) is plugged from the outside, **characterized in that** each winding carrier (6) is respectively removed from the pole web (3), wound in this state and then plugged from the outside onto the pole web (3), while the other winding carriers (5) remain on the pole webs (3), wherein after winding of a winding carrier (6) the same winding wire is used for the winding (7) of at least one further winding carrier (6) of the same stator without disconnecting the winding wire.

2. Method according to claim 1, **characterized in that** after the winding carriers (6) have been plugged onto the pole webs (3), the wires between the windings (7) are pressed against the ring of the pole shoes (1).

3. Method according to claim 1 or 2, **characterized in that** after winding and plugging all the winding carriers (6) onto the ring of the pole shoes (1), an outer yoke (8) is mounted.

4. Method according to one of the previous claims, **characterized in that** the pole shoes (1) are assembled of laminated stator sheets.

5. Method according to claim 4, **characterized in that** in order to form the ring of the pole shoes (1), the pole shoes (1) are connected to one another in a materially manner such that some stator sheets form connecting webs between the inner yoke segments (2).

6. Method according to one of the previous claims, **characterized in that** the outer yoke (8) is assembled of laminated stator sheets.

7. Method according to one of the previous claims, **characterized in that** during winding of the winding carrier (6) the wire provider rotates around the winding carrier (6).

8. Method according to one of claims 1 to 6, **characterized in that** during winding the winding carrier (6) rotates.

9. Method according to one of the previous claims, **characterized in that** the yoke (8) surrounding the pole shoes (1) consists of two or more parts and has, in particular a rectangular design.

## Revendications

1. Procédé de fabrication du stator d'une machine électrique et d'enroulement de supports d'enroulement (6) en matière plastique du stator, le stator comporte un anneau de patins polaires (1) disposés en forme d'anneau, dont les segments de culasse intérieurs (2) forment un espace cylindrique (5) pour le rotor et comportent chacun une âme de pôle (3) s'étendant radialement vers l'extérieur, sur chacun desquels est enfiché un support d'enroulement (6) de l'extérieur, **caractérisé en ce que** chaque support d'enroulement (6) est respectivement retiré de l'âme de pôle (3), enroulé dans cet état et ensuite enfiché de l'extérieur sur l'âme de pôle (3), tandis que les autres supports d'enroulement (5) restent sur les âmes de pôle (3), après quoi enroulement d'un support d'enroulement (6), le même fil d'enroulement est utilisé pour l'enroulement (7) d'au moins un autre support d'enroulement (6) du même stator sans déconnecter le fil d'enroulement.

2. Procédé selon la revendication 1, **caractérisé en ce qu'**après l'enfichage des supports d'enroulement (6) sur les âmes de pôle (3), les fils entre les enroulements (7) sont pressés contre l'anneau des patins polaires (1).

3. Procédé selon la revendication 1 ou 2, **caractérisé en ce qu'**après avoir enroulé et enfiché tous les supports d'enroulement (6) sur l'anneau des patins polaires (1), une culasse extérieure (8) est montée.

4. Procédé selon l'une des revendications précédentes, **caractérisé en ce que** les patins polaires (1) sont assemblés à partir de tôles de stator laminées.

5. Procédé selon la revendication 4, **caractérisé en ce que** pour former l'anneau des patins polaires (1), les patins polaires (1) sont reliés entre eux de manière matérielle de telle sorte que certaines tôles de stator forment des âmes de liaison entre les segments intérieurs (2) de culasse.

6. Procédé selon l'une des revendications précédentes, **caractérisé en ce que** la culasse extérieure (8) est assemblée à partir de tôles de stator laminées.

7. Procédé selon l'une des revendications précédentes, **caractérisé en ce que** pendant l'enroulement du support d'enroulement (6), le fournisseur de fil tourne autour du support d'enroulement (6).

8. Procédé selon l'une des revendications 1 à 6, **caractérisé en ce que** pendant l'enroulement, le support d'enroulement (6) tourne.

9. Procédé selon l'une des revendications précédentes, **caractérisé en ce que** la culasse (8) entourant les patins polaires (1) est constituée de deux ou plusieurs pièces et présente, en particulier, une forme rectangulaire.
